# EUROPEAN PATENT SPECIFICATION

(11) **EP 4 636 022 B1**
(45) Date of publication and mention of the grant of the patent: **25.11.2026**
(21) Application number: 24171420.3
(22) Date of filing: 19.04.2024
(51) Int. Cl.: C08L 23/10

(54) **POLYOLEFINS COMPOSITIONS OBTAINED FROM RECYCLED POLYOLEFINS**
POLYOLEFINZUSAMMENSETZUNGEN AUS RECYCELTEN POLYOLEFINEN
COMPOSITIONS DE POLYOLÉFINES OBTENUES À PARTIR DE POLYOLÉFINES RECYCLÉES

(43) Date of publication of application: 22.10.2025
(73) Proprietor: Basell Poliolefine Italia S.r.l., 20121 Milano (IT)
(72) Inventor: HEES, Timo, 65926 Frankfurt/M. (DE); CAVALIERI, Claudio, 44122 Ferrara (IT); CAMURATI, Isabella, 44122 Ferrara (IT); BURGIN, Emanuele, 44122 Ferrara (IT)
(74) Representative: LyondellBasell

(56) References cited:
- WO-A1-2023/117728
- US-A1- 20240 043 649
- US-A1- 20240 101 802
- STOIAN SERGIU ALEXANDRU ET AL: "Recycled polypropylene with improved thermal stability and melt processability", JOURNAL OF THERMAL ANALYSIS AND CALORIMETRY, KLUWER, DORDRECHT, NL, vol. 138, no. 4, 21 September 2019 (2019-09-21), pages 2469 - 2480, XP036947534, ISSN: 1388-6150, [retrieved on 20190921], DOI: 10.1007/S10973-019-08824-2
- SCRAPMANAGEMENT.COM, 6 December 2022 (2022-12-06), XP002812334, Retrieved from the Internet <URL:https://scrapmanagement.com/gallery-scrap-plastic-pictures/pp-corrugated/> [retrieved on 20241008]

## Description

### FIELD OF THE INVENTION

The present disclosure relates to polypropylene compositions containing recycled elastomeric material that can be used in preparation of injection molded articles.

### BACKGROUND OF THE INVENTION

Polyolefin compositions having elastic properties while maintaining a good thermoplastic behavior have been used in many application fields, due to the valued properties which are typical of polyolefins, such as chemical inertia, mechanical properties and nontoxicity. Moreover, they can be advantageously transformed into finished products with the same techniques used for thermoplastic polymers. In particular, flexible polymer materials are widely used in the medical field, as well as for packaging, injection molding and cables covering.

Elastic polypropylene compositions retaining good thermoplastic behavior have been obtained in the art by way of sequential copolymerization of propylene, optionally containing minor quantities of olefin comonomers, and then ethylene/propylene or ethylene/alpha-olefin copolymers mixtures. Catalysts based on halogenated titanium compounds supported on magnesium chloride are commonly used for this purpose. For instance, EP-A-472 946 describes flexible elastoplastic polyolefin compositions comprising, in parts by weight: A) 10-50 parts of an isotactic propylene homopolymer or copolymer; B) 5-20 parts of an ethylene copolymer, insoluble in xylene at room temperature; and C) 40-80 parts of an ethylene/propylene copolymer containing less than 40% by weight of ethylene and being soluble in xylene at room temperature; the intrinsic viscosity of said copolymer is preferably from 1.7 to 3 dl/g. Said compositions are relatively flexible and have good elastic properties.

US 2024/101802 A1 and US 2024/043649 A1 are also concerned with polymer compositions comprising recycled polymers.

In addition, polyolefin compositions, although being appreciated in terms of performances, give raise to concerns in terms of sustainability with particular reference to the fact that their production is based on the use of non-renewable sources.

As a result, a common attempt to mitigate the problem is that of replacing, at least in part, virgin polyolefin compositions with variable amounts of recycled plastic materials.

The recycled plastic polyolefin derive from streams of post-consumer waste (PCW) or post-industrial waste (PIW).

One of the key problems in polyolefin recycling, is the difficulty to quantitatively separate the various types of polymers so that the commercially available recycled products are almost invariably contaminated with heterogeneous materials of various source.

This fact leads to the consequence that polymer compositions including recycled materials are perceived of being affected by lower reliability and lower performances with respect to the compositions made of solely virgin polymers.

It has now been unexpectedly found that it is possible to have an improved property profile when a recycled polymers is added to a virgin polypropylene.

### SUMMARY OF THE INVENTION

It is therefore an object of the present disclosure a recycled polyolefin composition comprising:
A) from 50 wt% to 80 wt%; preferably from 54 wt% to 75 wt%; more preferably from 57 wt% to 73 wt%; of a first recycled polypropylene composition;
B) from 10 wt% to 30 wt%; preferably from 12 wt% to 28 wt%; more preferably from 15 wt% to 25 wt%; of a second recycled polypropylene composition;
C) from 9 wt% to 23 wt%; preferably from 10 wt% to 21 wt%; more preferably from 11 wt% to 19 wt%; of a polypropylene ethylene copolymercomprising:
   - (c1) from 21 wt% to 43 wt%, preferably from 23 wt% to 41 wt%; more preferably from 27 wt% to 37 wt% of a propylene ethylene copolymer, having:
      - units derived from ethylene, measured according to ¹³C-NMR, in an amount ranging from 1.7 wt% to 4.5 wt%; preferably from 2.0 wt% to 4.3 wt%; more preferably ranging from 2.6 wt% to 3.7 wt%;
      - a fraction soluble in xylene at 25°C lower than 8.0 wt%; preferably lower than 7.5 wt%; more preferably lower than 7.0 wt%; even more preferably lower than 6.5 wt%; preferably being higher than 0.5 wt% and
      - a Melt Flow Rate (ISO 1133 230°C/5.0 kg) ranging from 18.0 to 34.0 g/10min; preferably ranging from 20.0 to 32.5 g/10min; more preferably ranging from 22.0 to 30.1 g/10min;
   - (c2) from 57 wt% to 79 wt%; preferably from 59 wt% to 77 wt%; more preferably from 63 wt% to 73 wt% of a copolymer of propylene and ethylene having:
      - units derived from ethylene, measured according to ¹³C-NMR, in an amount ranging from 18.0 wt% to 36.0 wt%; preferably from 20.2 wt% to 34.4 wt%; more preferably ranging from 22.8 wt% to 32.3 wt%;

      said polypropylene composition (c) being further characterized by:
         - a Melt Flow Rate (ISO 1133 230°C/5.0 kg) ranging from 0.2 to 1.7 g/10 min; preferably from 0.3 to 1.4 g/10min; more preferably ranging from 0.4 to 1.2 g/10min;
         - an amount of fraction soluble in xylene at 25°C ranging from 52.0 wt% to 76.0 wt%; preferably from 54.0 wt% to 74.0 wt% ; more preferably from 56.0 wt% to 72.0 wt%;
         - intrinsic viscosity fraction soluble in xylene at 25°C, measured in tetrahydronaphthalene at 135 °C, ranging from 2.1 to 4.7 dl/g; preferably from 2.4 to 4.3 dl/g; more preferably ranging from 2.7 to 3.9 dl/g; and,
      in the said composition the sum of c1) and c2), being referred to the total weight of c1) and c2), is 100,
      the sum of the amounts of (A), (B) and (C) being referred to the total weight of (A), (B) and (C) is 100;
the first recycled polypropylene composition (A) has:
ethylene derived units content, measured with ¹³C-NMR, ranging from 2.50 wt% to 7.30 wt%;
butene derived units content, measured with ¹³C-NMR, ranging from 0.05 wt% to 0.30 wt%;
hexene derived units content, measured with ¹³C-NMR, ranging from 0.03 wt% to 0.23 wt%;
octene derived units content, measured with ¹³C-NMR, ranging from 0.02 wt% to 0.50 wt%;
Polyethylene terephtalate content, measured with ¹³C-NMR, ranging from 0.05 wt% to 0.8 wt% Propylene derived units content, measured with ¹³C-NMR, higher than 87.0 wt%;
Density, ISO 1183-1, ranging from 0.9400 Kg/dm³ to 0.9500 Kg/dm³; preferably ranging from 0.9423 Kg/dm³ to 0.9484 Kg/dm³; more preferably ranging from 0.9448 Kg/dm³ to 0.9476 Kg/dm³;
Melt Flow Rate (ISO 1133 230°C/2.16 kg) ranging from 1.2 to 20.3 g/10min; preferably ranging from 3.4 to 17.4 g/10min; more preferably ranging from 5.2 to 12.3 g/10min;
the second recycled polypropylene composition (B) has:
   Ethylene derived units content, measured with ¹³C-NMR, ranging from 7.5 wt% to 12.0 wt%; preferably from 8.0 wt% to 11.0 wt%;
   Butene derived units content, measured with ¹³C-NMR, lower than 0.05 wt%
   Propylene derived units content, measured with ¹³C-NMR, higher than 87.0 wt%
   Density, ISO 1183-1, ranging from 0.9550 Kg/dm³ to 0.9750 Kg/dm³; preferably ranging from 0.9590 Kg/dm³ to 0.9700 Kg/dm³; more preferably ranging from 0.9610 Kg/dm³ to 0.9670 Kg/dm³;
   Melt Flow Rate (ISO 1133 230°C/2.16 kg) ranging from 0.8 to 10.6 g/10min; preferably ranging from 1.7 to 9.4 g/10min; more preferably ranging from 2.6 to 8.3 g/10min.

### DETAILED DESCRIPTION OF THE INVENTION

Preferably the first recycled polypropylene composition (A) has:
Tensile modulus, measured according to ISO 527-2, ranging from 1060N/mm² to 1900 N/mm²;
preferably ranging from 1260 N/mm² to 1780 N/mm²; more preferably ranging from 1350 N/mm² to 1760 N/mm².

Preferably the first recycled polypropylene composition (A) has:
Charpy impact test at 23°C, determined according to ISO 179-1 eA, and ISO 1873-2, ranging from 2.2 KJ/m² to 9.0 KJ/m²; preferably ranging from 3.1 KJ/m² to 8.2 KJ/m²; more preferably ranging from 3.4 KJ/m² to 7.3 KJ/m².

Preferably the second recycled polypropylene composition (B) has:
Tensile modulus, measured according to ISO 527-2, ranging from 1160N/mm² to 1900 N/mm²;
preferably ranging from 1360 N/mm² to 1880 N/mm²; more preferably ranging from 1450 N/mm² to 1760 N/mm².

Preferably the second recycled polypropylene composition (B) has:
Charpy impact test at 23°C, determined according to ISO 179-1eA, and ISO 1873-2, ranging from 4.2 KJ/m² to 12.0 KJ/m²; preferably ranging from 5.1 KJ/m² to 11.2 KJ/m²; more preferably ranging from 6.4 KJ/m² to 10.3 KJ/m².

Preferably the second recycled polypropylene composition (B) has:
Elongation at break, measured according To ISO 527, ranging from 40 % to 200 %;preferably ranging from 60 % to 180 %; more preferably ranging from 80 % to 150 %

The term "copolymer" as used herein refers to polymers with two different recurring units.

The term "recycled" is used to designate polymer materials deriving from at least one cycle of processing into manufactured articles, as opposed to virgin polymers that is a polymer not subjected at least one cycle of processing into manufactured articles.

The term "consisting essentially of", as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component (A), (B) and (C) and any preferred range of features of components (A), (B) and (C) can be combined with any preferred range of one or more of the features of components (A) to (C) and with any possible additional component, and its features, described in the present disclosure.

Component C) can be prepared by polymerizing propylene, optionally in mixture with ethylene in the presence of a catalyst comprising the product of the reaction between:
i) a solid catalyst component comprising Ti, Mg, Cl, and at least an internal electron donor compound;
ii) an alkylaluminum compound and,
iii) an external electron-donor compound; preferably the external donor compound has the general formula:
   (R⁷)ₐ(R⁸)_{bS}i(OR⁹)_{c}, where a and b are integers from 0 to 2, c is an integer from 1 to 4 and the sum (a+b+c) is 4; R⁷, R⁸, and R⁹, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula Ti(OR)_{q-y}X_{y}, where q is the valence of titanium and y is a number between 1 and q, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl₄; the mixture is heated up to 80-130°C and kept at this temperature for 0.5-2 hours. The treatment with TiCl₄ can be carried out one or more times. The electron donor compound can be added in the desired ratios during the treatment with TiCl₄.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al2Et3Cl₃, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R7 and R8 is selected from branched alkyl, cycloalkyl or aryl groups with 3-10 carbon atoms optionally containing heteroatoms and R9 is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R8 is a branched alkyl or cycloalkyl group, optionally containing heteroatoms, and R9 is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

Component C) can be prepared in a continuous sequential polymerization process, wherein component b1) or c1) is prepared in the first reactor and component (b2) or c2) is prepared in the second reactor in the presence of component b1) or c1) according to the known techniques and operating in gas phase, or in liquid phase in the presence or not of inert diluent, or by mixed liquid-gas techniques.

Component C) is preferably a commercial polymer grade such as Adflex Q100F sold by Lyondellbasell.

Components (A) and (C) can be a Post-Industrial Resin (PIR) or a Post-Consumer Resin (PCR).

Post-Industrial Resin (PIR) is the waste generated from the manufacturing process that is reclaimed or used again in the same material.

Post-Consumer Resin (PCR) defined as recyclate derived from an end product that has completed its life cycle as a consumer item and would otherwise be disposed of as waste.

If needed, the final composition comprising (A)+(B)+(C) can be subject to a chemical treatment with organic peroxides in order to lower the average molecular weight and increase the melt flow index up to the value needed for the specific application.

Preferably the tensile modulus of the whole propylene polymer composition ranges from to 640 MPa to 1540 MPa more preferably from 740 to 1340 MPa; even more preferably from 850 to 1290 MPa .

The value of Charpy impact at 23°C preferably ranges from 9.3 KJ/m² to 22.5 KJ /m² ; more preferably it ranges from 10.5 KJ /m² to 20.1 KJ / m²; even more preferably it ranges from 11.0 KJ /m² to 18.6 KJ / m².

The whole propylene composition of the present disclosure can be obtained by mechanical blending of the components (A) (B) and C) according to conventional techniques.

The final composition comprising the components (A) (B) and C) may be added with conventional additives, fillers and pigments, commonly used in olefin polymers such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents may be added to the compositions of the present disclosure in quantities ranging from 0.05 wt% to 2 wt%, more preferably from 0.1 wt% to 1 wt%, with respect to the total weight, for example.

The propylene polymer composition of the present disclosure can be for the production of injection molding articles in particular in the automotive field.

The following examples are given in order to illustrate, but not limit the present disclosure.

### EXAMPLES

### CHARACTERIZATIONS

### Xylene-soluble (XS) Fraction at 25 °C

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%).

### Melt Flow Rate (MFR)

Measured according to ISO 1133-1 at 230 °C with a load of 2.16 kg or 5 kg, as specified.

### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ η ].

**Polydispersity index:** Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:$P . I . = 105 / Gc$ in which Gc is the crossover modulus which is defined as the value (expressed in Pa) at which G'=G" wherein G' is the storage modulus and G" is the loss modulus.

### Determination of the composition of recycled polymer(PP repro) via 1H and 13C NMR

PP repro is a mixture of polymers having an aliphatic hydrocarbon backbone (ethylene - E), propylene - P), and 1-butene (B, < 1.0 wt%), 1-hexene (H, < 1.0 wt%) and 1-octene (O, < 1.0 wt%) copolymers and possibly an aromatic hydrocarbon backbone (polystyrene and polyethylene terephthalate). Due to analytical complications in determining the composition of aromatic containing polymers via ¹³C NMR spectroscopy, the method was developed by using the combination of the results obtained via ¹H and ¹³C NMR spectra. In particular ¹³C NMR was used to determine the relative amount of ethylene, propylene 1-butene, 1-hexene and 1-octene copolymers, while ¹H NMR provided a quantification of the composition of aliphatic and aromatic components and the relative amounts of polystyrene and polyethylene terephthalate when present.

¹³C NMR and ¹H spectra were acquired on a Bruker AV600 spectrometer equipped with cryo probe, operating at 150.91 MHz and 600.13 MHz respectively in the Fourier transform mode at 120 °C.

About 30 mg of sample were dissolved at 120°C in 0.5 ml of 1,1,2,2 tetrachloroethane-d2 added with 0.1 mg/ml of Irganox 1010 (AO 1010) as antioxidant

For ¹³C NMR spectra the peak of the S_{δδ} carbon (nomenclature according C.J. Carman, R.A. Harrington and C.E. Wilkes, Macromolecules, 10, 3, 536 (1977)) was used as internal reference at 29.9 ppm. Each spectrum was acquired with a 90 ° pulse, 15 seconds of delay between pulses and CPD to remove 1H-13C coupling. 512 transients were stored in 65 K data points using a spectral window of 9000 Hz.

For ¹H NMR spectra the peak of the residual C2DHCl4 at 5.95 ppm was used as internal reference. Each spectrum was acquired with a 90° pulse, 5 seconds of delay between pulses and 128 transients stored in 64K data points using a spectral window of 9600 Hz.

### Evaluation of 13C NMR spectrum of Ethylene, Propylene, 1-Butene, 1-Hexene and 1-Octene copolymers

In the ¹³C NMR spectrum only the signals from Ethylene, Propylene, 1-Butene, 1-Hexene and 1-Octene copolymers were considered (assignments of peak relevant for quantification are reported in Table 1). Triad distribution (considering only EBE, EHE and EOE due to the low amount of these comonomers) was obtained from the integration of relevant peaks in ¹³C NMR spectrum (possible overlaps of the peaks of the antioxidant AO1010 were taken into account), using the following relations: $PPP = 100 {I}_{11} / Σ$ $for {I}_{3} / {I}_{4} < 1 : = PPE 100 {I}_{3} / Σ$ $for {I}_{3} / {I}_{4} > 1 : = PPE 100 \left({I}_{8}-6{I}_{4}\right) / Σ$ $EPE = 100 {I}_{7} / Σ$ $EBE = 100 {I}_{1} / Σ$ $EHE = 100 {I}_{6} / Σ$ $EOE = 100 \left({I}_{2}-{I}_{6}\right) / Σ$ $XEX = 100 {I}_{13} / Σ$ $XEE = 100 \left({I}_{12}-{I}_{2}\right) / Σ$ $EEE = 100 \left(0.5 \left({I}_{10}-{I}_{2}\right)+0.25 \left({I}_{9}+{I}_{8}\right)\right) / Σ$ Where: $Σ = {I}_{11} + \left({I}_{3} or \left({I}_{8}-6{I}_{4}\right)\right) + {I}_{7} + {I}_{1} + {I}_{6} + {I}_{2} - {I}_{6} + {I}_{13} + {I}_{12} - {I}_{2} + 0.5 \left({I}_{10}-{I}_{2}\right) + 0.25 \left({I}_{9}+{I}_{8}\right)$ and Iₙ are the areas of the corresponding carbon following the numbering scheme reported in Table 1 and X can be propylene, 1-butene , 1-hexene or 1-octene

The molar content of Ethylene, Propylene, 1-Butene and 1-Octene is obtained from triads using the following relations: $P \left(m%\right) = PPP + PPE + EPE$ $B \left(m%\right) = EBE$ $H \left(m%\right) = EHE$ $O \left(m%\right) = EOE$ $E \left(m%\right) = EEE + XEE + XEX$

Molar content was transformed in weight using monomers molecular weight.

### Evaluation of 1H NMR spectrum

The molar content of Polyethylene terephthalate (PET), Polystyrene (PS) and ethylene/propylene/1-butene/1-hexene/1-octene copolymers were obtained from ¹H spectra. The aromatic hydrogen peaks of PET and PS (assignments according to Table 2) were used, while the amount of ethylene/propylene/1-Butene/1-Hexene/1-Octene copolymers was determined by the integral of all the aliphatic hydrogens, from which the contribution of the 3 aliphatic hydrogens of the polystyrene was subtracted.

Molar amounts of PET, PS and E/P/B/H/O copolymers were evaluated from the following relations: $PET = 100 0.25 {I}_{a} / Σ$ $PS = 100 0.5 {I}_{c} / Σ$ $Total aliphatic E / P / B / H / O copolymers = 100 0.5 \left({I}_{e}-3PS-9{I}_{d}\right) / Σ$ Where $Σ = 0.25 {I}_{a} + 0.5 {I}_{c} + 0.5 \left({I}_{d}-3PS-100 0.5 \left({I}_{e}-3PS-9{I}_{d}\right)\right. / Σ$

Molar content was transformed in weight percentage using monomers molecular weight considering the MW of CH₂ to estimate the weight contribution from ethylene/propylene/1-butene/1-hexene/1-octene copolymers.

The weight content of P, E, B, H and O obtained from ¹³C spectrum was rescaled to obtain the weight percentage in the whole sample by multiplying each value (wt%) from triads with the rescaling factor "RF":
RF = [100-PET(wt%)-PS(wt%)]/100 where PET(wt%) and PS(wt%) are the compositions obtained from ¹H spectrum.

**Table a Assignments of the ¹³C NMR spectrum of Ethylene/Propylene/1-Octene/1-Butene copolymers**

| Number | Chemical Shift (ppm) | Carbon | Sequence |
|---|---|---|---|
| 1 | 39.6 | T_{δδ} | EBE |
| 2 | 38.8 | T_{δδ} | EOE + EHE |
| 3 | 38.2 - 37.6 | S_{αγ} | PE |
| 4 | 36.2 | CH₂ | AO1010 |
| 6 | 34.0 | 4B₄ | EHE |
| 7 | 33.3 - 33.2 | T_{δδ} | EPE |
| 8 | 30.8 - 30.7 | T_{βδ} | PPE |
| 8 | 30.3 | S_{γδ} | XEEE |
| 9 | 30.2 | S_{γδ} | PEEE |
| 10 | 29.9 | S_{δδ +} 4B₆ | EEE + O |
| 11 | 28.8 - 28.2 | T_{ββ} | PPP |
| 12 | 27.4 - 26.7 | S_{βδ} + 5B₆ | XE+O |
| 13 | 24.7 - 24.1 | S_{ββ} | XEX |

**Table b Assignments of the ¹H NMR spectrum of Ethylene/Propylene/1-Butene/1-Hexene/1-Octene copolymers containing PS and PET**

| Number | Chemical Shift (ppm) | Proton | Sequence |
|---|---|---|---|
| a | 8.08 | CH | PET |
| b | 7.20 - 6.81 | CH | PS |
| c | 6.81 - 6.33 | CH | PS |
| d | 2.91 | CH₂ | AO1010 |
| e | 1.80 - 0.70 | CH + CH_{2 +} CH3 | Total aliphatic |
| | 1.25 | CH + CH₂ | PS |

### Ethylene (C2) content

### ¹³C NMR of propylene/ethylene copolymers components B) and C)

¹³C NMR spectra were acquired on a Bruker AV-600 spectrometer equipped with cryoprobe, operating at 160.91 MHz in the Fourier transform mode at 120°C.

The peak of the S_{ββ} carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations:

| | | |
|---|---|---|
| PPP = 100 T_{ββ}/S | PPE = 100 T_{βδ}/S | EPE = 100 T_{δδ}/S |
| PEP = 100 S_{ββ}/S | PEE= 100 S_{βδ}/S | EEE = 100 (0.25 S_{γδ}+0.5 S_{δδ})/S |

$S = {T}_{ββ} + {T}_{βδ} + {T}_{δδ} + {S}_{ββ} + {S}_{βδ} + 0.25 {S}_{γδ} + 0.5 {S}_{δδ}$

The molar percentage of ethylene content was evaluated using the following equation:
$E % mol = 100 * \left[PEP+PEE+EEE\right]$ The weight percentage of ethylene content was evaluated using the following equation: $E % wt . = \frac{100 * E % mol * {MW}_{E}}{E % mol * {MW}_{E} + P % mol * {MW}_{P}}$
where P% mol is the molar percentage of propylene content, while MW_{E} and MW_{P} are the molecular weights of ethylene and propylene, respectively.

The product of reactivity ratio *r*₁*r*₂ was calculated according to Carman (C.J. Carman, R.A. Harrington and C.E. Wilkes, Macromolecules, 1977; 10, 536) as: ${r}_{1} {r}_{2} = 1 + \left(\frac{EEE + PEE}{PEP}+1\right) - \left(\frac{P}{E}+1\right) {\left(\frac{EEE + PEE}{PEP}+1\right)}^{0.5}$

The tacticity of Propylene sequences was calculated as mm content from the ratio of the PPP mmT_{ββ} (28.90-29.65 ppm) and the whole T_{ββ} (29.80-28.37 ppm).

### Samples for the mechanical tests

Samples have been obtained according to ISO 1873-2:2007.
**Charpy impact test** is determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,
**Melting point and crystallization point**

The melting point has been measured by using a DSC instrument according to ISO 11357-3, at scanning rate of 20C/min both in cooling and heating, on a sample of weight between 5 and 7 mg., under inert N₂ flow. Instrument calibration made with Indium.
**Density,** measured according to ISO 1183-1

### EXAMPLES

### Example 1

### Component A)

Component A is recycled polymer grade from raffia bag The properties of the polymer are reported on table 1.

**Table 1**

| Component A | | A |
|---|---|---|
| MFR 2.16 Kg/230°C | g/10min | 7,77 |
| Density | kg/dm3 | 0,9465 |
| XS | % | 4,40 |
| Tm | °C | 160.2 123.1 |
| Tc | °C | 118.4 110.5 |
| Hc | J/g | -94.1 |
| Hm | J/g | 83.4 |
| C2 (NMR) | wt% | 4.8 |
| C3 (NMR) | wt% | >88.0 |
| C4 (NMR) | wt% | 0.2 |
| C6 (NMR) | wt% | 0.1 |
| C8 (NMR) | wt% | 0.2 |
| PET | wt% | 0.4 |
| Aluminum | ppm | 80 |
| Chlorine | ppm | 110 |
| Magnesium | ppm | 250 |
| Titanium | ppm | 450 |
| Antimonium | ppm | - |
| Barium | ppm | - |
| Bromium | ppm | - |
| Chromium | ppm | - |
| Calcium | ppm | 15000 |
| Iron | ppm | - |
| Fluorine | ppm | - |
| Lead | ppm | 10 |
| Phosphorus | ppm | 50 |
| Potassium | ppm | 30 |
| Copper | ppm | 10 |
| Silicium | ppm | 210 |
| Sodium | ppm | 100 |
| Zinc | ppm | 25 |
| Zirconium | ppm | <10 |
| Sulfur | ppm | 40 |
| Ashes (800°C) before antiacid treatment | ppm | 35313 |
| C- emission VDA277 | µg/gr | 7.3 |
| Corrosivity (280°C) | | 0 |
| Mechanical Properties | | |
| Tensile Modulus | N/mm² | 1560 |
| Charpy Impact @ 23°C | KJ/m² | 3.8 |
| Charpy Impact @ 0°C | KJ/m² | 2 |
| Charpy Impact @ -20°C | KJ/m² | - |
| Stress @ yield | N/mm² | 32 |
| Elongation @ yield | % | 10 |
| Stress @ break | N/mm² | 18 |
| Elongation @ break | % | 65 |
| D/B TT | °C | >23 |

### Component B)

Component B is recycled polymer grade from corrugated sheets The properties of the polymer are reported on table 2.

**Table 2**

| Component B | | |
|---|---|---|
| MFR 2.16 Kg/230°C | g/10min | 4.80 |
| Density | kg/dm3 | 0.9635 |
| XS | % | 12.00 |
| Tm | °C | 162.7 |
| Tc | °C | 121.7 |
| Hc | J/g | -86.4 |
| Hm | J/g | 74.6 |
| C2 (NMR) | %wt | 8.9 |
| C4 (NMR) | %wt | 0.04 |
| C3 (NMR) | %wt | >88 |
| Aluminum | ppm | on going |
| Chlorine | ppm | |
| Magnesium | ppm | |
| Titanium | ppm | |
| Antimonium | ppm | |
| Barium | ppm | |
| Bromium | ppm | |
| Chromium | ppm | |
| Calcium | ppm | |
| Iron | ppm | |
| Fluorine | ppm | |
| Lead | ppm | |
| Phosphorus | ppm | |
| Potassium | ppm | |
| Copper | ppm | |
| Silicium | ppm | |
| Sodium | ppm | |
| Zinc | ppm | |
| Zirconium | ppm | |
| Sulfur | ppm | |
| Ashes (800°C) before antiacid treatment | ppm | 82000 |
| C- emission VDA277 | µg/gr | 6.4 |
| Corrosivity (280°C) | | 0 |

| Mechanical properties | | |
|---|---|---|
| Tensile Modulus | N/mm² | 1630 |
| Charpy Impact @ 23°C | KJ/m² | 9.4 |
| Charpy Impact @ 0°C | KJ/m² | 4.6 |
| Charpy Impact @ -20°C | KJ/m² | 3.4 |
| Stress @ yield | N/mm² | 26 |
| Elongation @ yield | % | 6 |
| Stress @ break | N/mm² | 18 |
| Elongation @ break | % | 119 |

| I.M. ASTM D 4101 | | |
|---|---|---|
| D/B TT | °C | -17.0 |

### Component C)

Component C is a commercial grade Adflex Q100F sold by LyondellBasell, it can be synthesized according to the procedure known in the art, Adflex Q100F has the property set forth in table 3.

**Table 3**

| | | |
|---|---|---|
| | | |

| component c1) | | |
|---|---|---|
| XS | wt% | <6.5 |
| C2 content | wt% | 3.2 |
| MFR 230°C/2.16 kg | g/10 min | 25.0 |
| split | wt% | 32 |

| component c2) | | |
|---|---|---|
| C2 content | wt% | 27.0 |
| split | wt% | 68 |

| total composition | | |
|---|---|---|
| MFR 230°C/5 kg | g/10 min | 0.6 |
| XS | wt% | 64 |
| IV on XS | dl/g | 3.2 |

| | | |
|---|---|---|
| XS fraction soluble in xylene at 25°C C2 ethylene derived units IV intrinsic viscosity | | |

Components A), B) and C) have been blended in an extruder (Berstorff extruder). The polymer particles are extruded under nitrogen atmosphere in a twin screw extruder, at a rotation speed of 250 rpm and a melt temperature of 200-250° C. The composition is reported in table 4 and the characterization of the obtained compositions is reported in table 5.

**Table 4**

| | Ex 1 | Comp ex 2 |
|---|---|---|
| Component A | 65 | 60 |
| Component B | 20 | 40 |
| Component C | 15 | 0 |

To the blend of examples 1 and comparative examples 2 1 wt% of Anti-oxidants MB (30%) and 0.5 wt% of MB PE Black (40% CB) have been added

**Table 5**

| | **Unit** | **Ex 1** | **Comp ex 2** |
|---|---|---|---|
| MFR(200°C/2,16kg) | g/10 min | 4,91 ±0,40 | 6,83 ±0,08 |
| Ash content | % | 3,8 ±0,1 | 4,5 ±0,1 |
| OIt(200°C) | Min | 24 ±3 | 4 ±1 |
| Tensile modulus | MPa | 1034 ±11 | 1385 ±18 |
| Charpy impact 23°C | kJ/m² | 12,5 ±1,0 | 6,2 ±0,3 |

Charpy of the example 1 is increased while the tensile modulus is substantially maintained.

## Claims

1. A recycled polyolefin composition comprising:
A) from 50 wt% to 80 wt%; of a first recycled polypropylene composition;
B) from 10 wt% to 30 wt%; of a second recycled polypropylene composition;
C) from 9 wt% to 23 wt%; of a polypropylene ethylene copolymer comprising:
- (c1) from 21 wt% to 43 wt%, of a propylene ethylene copolymer, having:
- units derived from ethylene, measured according to ¹³C-NMR, in an amount ranging from 1.7 wt% to 4.5 wt%;
- a fraction soluble in xylene at 25°C lower than 8.0 wt%; and
- a Melt Flow Rate (ISO 1133 230°C/5.0 kg) ranging from 18.0 to 34.0 g/10min;
- (c2) from 57 wt% to 79 wt%; of a copolymer of propylene and ethylene having:
- units derived from ethylene, measured according to ¹³C-NMR, in an amount ranging from 18.0 wt% to 36.0 wt%;
said polypropylene composition (c) being further **characterized by**:
- a Melt Flow Rate (ISO 1133 230°C/5.0 kg) ranging from 0.2 to 1.7 g/10 min;
- an amount of fraction soluble in xylene at 25°C ranging from 52.0 wt% to 76.0 wt%;
- intrinsic viscosity fraction soluble in xylene at 25°C, measured in tetrahydronaphthalene at 135 °C, ranging from 2.1 to 4.7 dl/g; and,
in the said composition the sum of c1) and c2), being referred to the total weight of c1) and c2), is 100,
the sum of the amounts of (A), (B) and (C) being referred to the total weight of (A), (B) and (C) is 100;
the first recycled polypropylene composition (A) has:
Ethylene derived units content, measured with ¹³C-NMR, ranging from 2.50 wt% to 7.30 wt%;
Butene derived units content, measured with ¹³C-NMR, ranging from 0.05 wt% to 0.30 wt%;
Hexene derived units content, measured with ¹³C-NMR, ranging from 0.03 wt% to 0.23 wt%;
Octene derived units content, measured with ¹³C-NMR, ranging from 0.02 wt% to 0.50 wt%;
Polyethylene terephtalate content, measured with ¹³C-NMR, ranging from 0.05 wt% to 0.8 wt% Propylene derived units content, measured with ¹³C-NMR, higher than 87.4 wt%
Density, ISO 1183-1, ranging from 0.9400 Kg/dm³ to 0.9500 Kg/dm³;
Melt Flow Rate (ISO 1133 230°C/2.16 kg) ranging from 1.2 to 20.3 g/10min;
the second recycled polypropylene composition (B) has:
Ethylene derived units content, measured with ¹³C-NMR, ranging from 7.5 wt% to 12.0 wt%;
Butene derived units content, measured with ¹³C-NMR, lower than 0.05 wt%
Propylene derived units content, measured with ¹³C-NMR, higher than 87.0 wt%
Density, ISO 1183-1, ranging from 0.9550 Kg/dm³ to 0.9750 Kg/dm³;
Melt Flow Rate (ISO 1133 230°C/2.16 kg) ranging from 0.8 to 10.6 g/10min;

2. The a recycled polyolefin composition according to claim 1 wherein the component (A) ranges from 54 wt% to 75 wt component (B) ranges from 12 wt% to 28 wt% and component C) ranges from 10 wt% to 21 wt%.

3. The a recycled polyolefin composition according to claims 1 or 2 wherein in component B) Ethylene derived units content, measured with ¹³C-NMR, ranges from 8.0 wt% to 11.0 wt%.

4. The a recycled polyolefin composition according to any of the preceding claims wherein in component C) component c1) ranges from 23 wt% to 41 wt%; and component c2) ranges from 59 wt% to 77 wt%;

5. The a recycled polyolefin composition according to any of the preceding claims wherein in component c1) the units derived from ethylene, measured according to ¹³C-NMR, in an amount ranges from 2.0 wt% to 4.3 wt%.

6. The a recycled polyolefin composition according to any of the preceding claims wherein in component B) Density, ISO 1183-1, ranges from 0.9590 Kg/dm³ to 0.9700 Kg/dm³.

7. The a recycled polyolefin composition according to any of the preceding claims wherein component (C) has the amount of fraction soluble in xylene at 25°C ranging from 54.0 wt% to 74.0 wt%.

8. The a recycled polyolefin composition according to any of the preceding claims wherein in component (B) the Melt Flow Rate (ISO 1133 230°C/2.16 kg) ranges from 1.7 to 9.4 g/10min.

9. The a recycled polyolefin composition according to any of the preceding claims wherein component (C) has the intrinsic viscosity fraction soluble in xylene at 25°C, measured in tetrahydronaphthalene at 135 °C, ranging from 2.4 to 4.3 dl/g.

10. The a recycled polyolefin composition according to a to any of the preceding claims wherein in component A) the melt flow rate (ISO 1133-1 230°C/2.16 kg) ranges from 3.4 to 17.4 g/10min.

11. The a recycled polyolefin composition according to any of the preceding claims wherein in component (C) the Melt Flow Rate (ISO 1133 230°C/5.0 kg) of component c1) ranges from 20.0 to 32.5 g/10min;

12. The a recycled polyolefin composition according to any of the preceding claims wherein in component (C) the tensile modulus, measured according to ISO 527-2, ranges from 1020 N/mm² to 1630 N/mm².

13. The a recycled polyolefin composition according to any of the preceding claims wherein in component (C) the Melt Flow Rate (ISO 1133 230°C/5.0 kg) ranges from 0.3 to 1.4 g/10min.

14. The a recycled polyolefin composition according to any of the preceding claims wherein component A) has the Density, ISO 1183-1, ranging from 0.9423 Kg/dm³ to 0.9484 Kg/dm³.

15. An injection molded article obtained from the recycled polyolefin composition according to any of the preceding claims.

## Patentansprüche

1. Eine recycelte Polyolefin-Zusammensetzung, umfassend:
A) 50 Gew.-% bis 80 Gew.-% einer ersten recycelten Polypropylen-Zusammensetzung;
B) 10 Gew.-% bis 30 Gew.-% einer zweiten recycelten Polypropylen-Zusammensetzung;
C) 9 Gew.-% bis 23 Gew.-% eines Polypropylen-Ethylen-Copolymers, umfassend:
- (c1) 21 Gew.-% bis 43 Gew.-% eines Propylen-Ethylen-Copolymers mit:
- Einheiten, die von Ethylen abgeleitet sind, gemessen gemäß ¹³C-NMR, in einer Menge im Bereich von 1,7 Gew.-% bis 4,5 Gew.-%;
- einen bei 25 °C in Xylol löslichen Anteil von weniger als 8,0 Gew.-%; und
- eine Schmelzflussrate (ISO 1133, 230 °C/5,0 kg) im Bereich von 18,0 bis 34,0 g/10 min;
- (c2) 57 Gew.-% bis 79 Gew.-% eines Copolymers aus Propylen und Ethylen mit:
- von Ethylen abgeleitete Einheiten, gemessen gemäß ¹³C-NMR, in einer Menge im Bereich von 18,0 Gew.-% bis 36,0 Gew.-%;
wobei die Polypropylen-Zusammensetzung (c) ferner **gekennzeichnet ist durch**:
- einer Schmelzflussrate (ISO 1133, 230 °C/5,0 kg) im Bereich von 0,2 bis 1,7 g/10 min;
- einen Anteil an bei 25 °C in Xylol löslichen Fraktionen im Bereich von 52,0 Gew.-% bis 76,0 Gew.-%;
- eine intrinsische Viskosität des in Xylol bei 25 °C löslichen Anteils, gemessen in Tetrahydronaphthalin bei 135 °C, im Bereich von 2,1 bis 4,7 dl/g; und
wobei in der genannten Zusammensetzung die Summe aus c1) und c2), bezogen auf das Gesamtgewicht von c1) und c2), 100 beträgt,
wobei die Summe der Mengen von (A), (B) und (C), bezogen auf das Gesamtgewicht von (A), (B) und (C), 100 beträgt;
die erste recycelte Polypropylen-Zusammensetzung **(A)** weist auf:
Gehalt an von Ethylen abgeleiteten Einheiten, gemessen mittels ¹³C-NMR, im Bereich von 2,50 Gew.-% bis 7,30 Gew.-%;
Gehalt an von Buten abgeleiteten Einheiten, gemessen mittels ¹³C-NMR, im Bereich von 0,05 Gew.-% bis 0,30 Gew.-%;
Gehalt an aus Hexen abgeleiteten Einheiten, gemessen mittels ¹³C-NMR, im Bereich von 0,03 Gew.-% bis 0,23 Gew.-%;
Gehalt an von Octen abgeleiteten Einheiten, gemessen mittels ¹³C-NMR, im Bereich von 0,02 Gew.-% bis 0,50 Gew.-%;
Gehalt an Polyethylenterephthalat, gemessen mittels ¹³C-NMR, im Bereich von 0,05 Gew.-% bis 0,8 Gew.-%;
Gehalt an von Propylen abgeleiteten Einheiten, gemessen mittels ¹³C-NMR, über 87,4 Gew.-% Dichte gemäß ISO 1183-1 im Bereich von 0,9400 ^{kg/dm³}bis 0,9500 ^{kg/dm³};
Schmelzindex (ISO 1133, 230 °C/2,16 kg) im Bereich von 1,2 bis 20,3 g/10 min;
Die zweite recycelte Polypropylen-Zusammensetzung **(B)** weist Folgendes auf:
einen Gehalt an von Ethylen abgeleiteten Einheiten, gemessen mittels ¹³C-NMR, im Bereich von 7,5 Gew.-% bis 12,0 Gew.-%;
einen Gehalt an von Buten abgeleiteten Einheiten, gemessen mittels ¹³C-NMR, von weniger als 0,05 Gew.-%;
Gehalt an von Propylen abgeleiteten Einheiten, gemessen mittels ¹³C-NMR, von mehr als 87,0 Gew.-%;
eine Dichte gemäß ISO 1183-1 im Bereich von 0,9550 ^{kg/dm³}bis 0,9750 kg^{/dm³};
Schmelzindex (ISO 1133, 230 °C/2,16 kg) im Bereich von 0,8 bis 10,6 g/10 min;

2. Eine recycelte Polyolefin-Zusammensetzung gemäß Anspruch 1, wobei die Komponente (A) zwischen 54 Gew.-% und 75 Gew.-% liegt, die Komponente (B) zwischen 12 Gew.-% und 28 Gew.-% liegt und die Komponente (C) zwischen 10 Gew.-% und 21 Gew.-% liegt.

3. Die Polyolefin-Recyclingzusammensetzung gemäß Anspruch 1 oder 2, wobei in Komponente B) der Gehalt an von Ethylen abgeleiteten Einheiten, gemessen mittels ¹³C-NMR, im Bereich von 8,0 Gew.-% bis 11,0 Gew.-% liegt.

4. Die recycelte Polyolefin-Zusammensetzung gemäß einem der vorstehenden Ansprüche, wobei in Komponente C) der Anteil der Komponente c1) zwischen 23 Gew.-% und 41 Gew.-% liegt und der Anteil der Komponente c2) zwischen 59 Gew.-% und 77 Gew.-% liegt;

5. Die recycelte Polyolefin-Zusammensetzung gemäß einem der vorstehenden Ansprüche, wobei in Komponente c1) der Gehalt an von Ethylen abgeleiteten Einheiten, gemessen mittels ¹³C-NMR, in einer Menge von 2,0 Gew.-% bis 4,3 Gew.-% liegt.

6. Die recycelte Polyolefin-Zusammensetzung gemäß einem der vorstehenden Ansprüche, wobei in Komponente B) die Dichte gemäß ISO 1183-1 im Bereich von 0,9590 ^{kg/dm³}bis 0,9700 ^{kg/dm³}liegt.

7. Recycelte Polyolefin-Zusammensetzung gemäß einem der vorstehenden Ansprüche, wobei die Komponente (C) einen Anteil an bei 25 °C in Xylol löslichen Fraktionen im Bereich von 54,0 Gew.-% bis 74,0 Gew.-% aufweist.

8. Die recycelte Polyolefin-Zusammensetzung gemäß einem der vorstehenden Ansprüche, wobei in Komponente (B) der Schmelzindex (ISO 1133, 230 °C/2,16 kg) im Bereich von 1,7 bis 9,4 g/10 min liegt.

9. Die recycelte Polyolefin-Zusammensetzung gemäß einem der vorstehenden Ansprüche, wobei die Komponente (C) einen in Xylol bei 25 °C löslichen Anteil der intrinsischen Viskosität aufweist, gemessen in Tetrahydronaphthalin bei 135 °C, der im Bereich von 2,4 bis 4,3 dl/g liegt.

10. Die recycelte Polyolefin-Zusammensetzung gemäß einem der vorstehenden Ansprüche, wobei in Komponente A) der Schmelzindex (ISO 1133-1, 230 °C/2,16 kg) im Bereich von 3,4 bis 17,4 g/10 min liegt.

11. Die recycelte Polyolefin-Zusammensetzung gemäß einem der vorstehenden Ansprüche, wobei in Komponente (C) der Schmelzindex (ISO 1133, 230 °C/5,0 kg) der Komponente c1) im Bereich von 20,0 bis 32,5 g/10 min liegt;

12. Die recycelte Polyolefin-Zusammensetzung gemäß einem der vorstehenden Ansprüche, wobei in Komponente (C) der Zugmodul, gemessen gemäß ISO 527-2, im Bereich v , von 1020 N/mm²bis 1630 ^{N/}mm²liegt.

13. Eine recycelte Polyolefin-Zusammensetzung gemäß einem der vorstehenden Ansprüche, wobei in Komponente (C) der Schmelzindex (ISO 1133, 230 °C/5,0 kg) im Bereich von 0,3 bis 1,4 g/10 min liegt.

14. Eine recycelte Polyolefin-Zusammensetzung gemäß einem der vorstehenden Ansprüche, wobei die Komponente A) eine Dichte gemäß ISO 1183-1 im Bereich von 0,9423 ^{kg/dm³}bis 0,9484 kg^{/dm³}aufweist.

15. Ein Spritzgussformteil, das aus der recycelten Polyolefin-Zusammensetzung gemäß einem der vorstehenden Ansprüche hergestellt wurde.

## Revendications

1. Composition de polyoléfine recyclée comprenant :
A) de 50 % en poids à 80 % en poids d'une première composition de polypropylène recyclé ;
B) de 10 % en poids à 30 % en poids d'une deuxième composition de polypropylène recyclé ;
C) de 9 % en poids à 23 % en poids d'un copolymère de polypropylène et d'éthylène comprenant:
- (c1) de 21 % en poids à 43 % en poids d'un copolymère de propylène et d'éthylène, présentant :
- des motifs dérivés de l'éthylène, mesurés selon la méthode ¹³RMN C, en une quantité comprise entre 1,7 % en poids et 4,5 % en poids ;
- une fraction soluble dans le xylène à 25 °C inférieure à 8,0 % en poids ; et
- un indice de fluidité à chaud (ISO 1133, 230 °C/5,0 kg) compris entre 18,0 et 34,0 g/10 min ;
- (c2) de 57 % en poids à 79 % en poids d'un copolymère de propylène et d'éthylène présentant :
- des motifs dérivés de l'éthylène, mesurés par RMN au carbone¹³, en une quantité comprise entre 18,0 % en poids et 36,0 % en poids ;
ladite composition de polypropylène (c) étant en outre **caractérisée par** :
- un indice de fluidité à chaud (ISO 1133, 230 °C/5,0 kg) compris entre 0,2 et 1,7 g/10 min ;
- une teneur en fraction soluble dans le xylène à 25 °C comprise entre 52,0 % en poids et 76,0 % en poids ;
- une viscosité intrinsèque de la fraction soluble dans le xylène à 25 °C, mesurée dans le tétrahydronaphtalène à 135 °C, comprise entre 2,1 et 4,7 dl/g ; et,
dans ladite composition, la somme de c1) et c2), rapportée au poids total de c1) et c2), est égale à 100,
la somme des quantités de (A), (B) et (C), rapportée au poids total de (A), (B) et (C), est égale à 100 ;
la première composition de polypropylène recyclé **(A)** présente :
Teneur en motifs dérivés de l'éthylène, mesurée par RMN au¹³C, comprise entre 2,50 % en poids et 7,30 % en poids ;
la teneur en motifs dérivés du butène, mesurée par RMN au¹³C, comprise entre 0,05 % et 0,30 % en poids ;
Teneur en motifs dérivés de l'hexène, mesurée par RMN au¹³C, comprise entre 0,03 % et 0,23 % en poids ;
Teneur en motifs dérivés de l'octène, mesurée par RMN au¹³C, comprise entre 0,02 % et 0,50 % en poids ;
Teneur en polyéthylène téréphtalate, mesurée par RMN au¹³C, comprise entre 0,05 % et 0,8 % en poids
Teneur en motifs dérivés du propylène, mesurée par RMN au¹³C, supérieure à 87,4 % en poids Densité, selon la norme ISO 1183-1, comprise entre 0,9400 ^{kg/dm³}et 0,9500 ^{kg/dm³};
Indice de fluidité à chaud (ISO 1133, 230 °C/2,16 kg) compris entre 1,2 et 20,3 g/10 min ;
la deuxième composition de polypropylène recyclé **(B)** présente :
une teneur en motifs dérivés de l'éthylène, mesurée par RMN au¹³C, comprise entre 7,5 % en poids et 12,0 % en poids ;
une teneur en motifs dérivés du butène, mesurée par RMN au¹³C, inférieure à 0,05 % en poids une teneur en motifs dérivés du propylène, mesurée par RMN au¹³C, supérieure à 87,0 % en poids une densité, selon la norme ISO 1183-1, comprise entre 0,9550 ^{kg/dm³}et 0,9750 ^{kg/dm³};
Indice de fluidité à chaud (ISO 1133, 230 °C/2,16 kg) compris entre 0,8 et 10,6 g/10 min ;

2. Composition de polyoléfine recyclée selon la revendication 1, dans laquelle le composant (A) représente entre 54 % et 75 % en poids, le composant (B) représente entre 12 % et 28 % en poids et le composant (C) représente entre 10 % et 21 % en poids.

3. Composition de polyoléfine recyclée selon les revendications 1 ou 2, dans laquelle, dans le composant ⁽B), la teneur en motifs dérivés de l'éthylène, mesurée par RMN au carbone¹³, est comprise entre 8,0 % en poids et 11,0 % en poids.

4. Composition de polyoléfine recyclée selon l'une quelconque des revendications précédentes, dans laquelle, dans le composant C), le composant c1) est compris entre 23 % en poids et 41 % en poids ; et le composant c2) est compris entre 59 % en poids et 77 % en poids ;

5. Composition de polyoléfine recyclée selon l'une quelconque des revendications précédentes, dans laquelle, dans le composant c1), la quantité de motifs dérivés de l'éthylène, mesurée par RMN ^{au (13)}C, est comprise entre 2,0 % en poids et 4,3 % en poids.

6. Composition de polyoléfine recyclée selon l'une quelconque des revendications précédentes, dans laquelle, dans le composant B), la densité, selon la norme ISO 1183-1, est comprise entre 0,9590 ^{kg/dm³}et 0,9700 ^{kg/dm³}.

7. Composition de polyoléfine recyclée selon l'une quelconque des revendications précédentes, dans laquelle le composant (C) présente une quantité de fraction soluble dans le xylène à 25 °C comprise entre 54,0 % en poids et 74,0 % en poids.

8. Composition de polyoléfine recyclée selon l'une quelconque des revendications précédentes, dans laquelle, dans le composant (B), l'indice de fluidité à chaud (ISO 1133, 230 °C/2,16 kg) est compris entre 1,7 et 9,4 g/10 min.

9. Composition de polyoléfine recyclée selon l'une quelconque des revendications précédentes, dans laquelle le composant (C) présente une viscosité intrinsèque de la fraction soluble dans le xylène à 25 °C, mesurée dans du tétrahydronaphtalène à 135 °C, comprise entre 2,4 et 4,3 dl/g.

10. Composition de polyoléfine recyclée selon l'une quelconque des revendications précédentes, dans laquelle, pour le composant A), l'indice de fluidité à chaud (ISO 1133-1, 230 °C/2,16 kg) est compris entre 3,4 et 17,4 g/10 min.

11. Composition de polyoléfine recyclée selon l'une quelconque des revendications précédentes, dans laquelle, dans le composant (C), l'indice de fluidité à chaud (ISO 1133, 230 °C/5,0 kg) du composant c1) est compris entre 20,0 et 32,5 g/10 min ;

12. Composition de polyoléfine recyclée selon l'une quelconque des revendications précédentes, dans laquelle, dans le composant (C) , le module de traction, mesuré selon la norme ISO 527-2, est compris entre 1 020 N/mm²et¹ 630 N/mm².

13. Composition de polyoléfine recyclée selon l'une quelconque des revendications précédentes, dans laquelle, pour le composant (C), l'indice de fluidité à chaud (ISO 1133, 230 °C/5,0 kg) est compris entre 0,3 et 1,4 g/10 min.

14. Composition de polyoléfine recyclée selon l'une quelconque des revendications précédentes, dans laquelle le composant A) présente une densité, selon la norme ISO 1183-1, comprise entre 0,9423 ^{kg/dm³}et 0,9484 kg^{/dm³}.

15. Un article moulé par injection obtenu à partir de la composition de polyoléfine recyclée selon l'une quelconque des revendications précédentes.
